# EUROPEAN PATENT SPECIFICATION

(11) **EP 3 230 933 B1**
(45) Date of publication and mention of the grant of the patent: **20.02.2019**
(21) Application number: 15813510.3
(22) Date of filing: 11.12.2015
(51) Int. Cl.: G06Q 20/02, G06Q 20/08, G06Q 20/16, G06Q 30/04, H04M 3/22, H04M 3/42, H04M 3/51, H04M 3/523, G06Q 20/30, G06Q 20/34, G06Q 20/40, H04M 7/12

(54) **METHOD AND APPARATUS FOR CALL CORRELATION**
VERFAHREN UND VORRICHTUNG ZUR KORRELATION VON ANRUFEN
PROCEDEE ET APPAREIL POUR LA CORRELATION D'APPEL

(30) Priority: 12.12.2014 GB 201422167
(43) Date of publication of application: 18.10.2017
(73) Proprietor: Aeriandi Limited, Oxford, Oxfordshire OX2 7HT (GB)
(72) Inventor: BRYARS, Daniel James, Oxford Oxfordshire OX2 7HT (GB); HARWOOD, Thomas Christopher, Oxford Oxfordshire OX2 7HT (GB)
(74) Representative: Bingham, Ian Mark
(86) International application number: PCT/GB2015/053899
(87) International publication number: WO 2016/092330

(56) References cited:
- GB-A- 2 339 362
- US-A- 5 715 307
- US-A1- 2006 034 436
- US-A1- 2013 304 650

## Description

The present invention relates to a method and apparatus for call correlation. In particular, the present invention provides methods and apparatus for correlating a telephone call between a first party and a second party with information that is to be used in a third party service implemented in relation to the telephone call.

In many industries it is desirable for businesses to allow for interaction with their customers/clients via telephone as part of their customer relationship management (CRM). For example, a large proportion of businesses that have a significant number of individual customers/clients have centralised contact/call centres staffed by agents that represent the business during telephone calls with customers/clients.

As well as dealing with general enquiries, providing product/service support, handling complaints, etc. merchants and service providers also often require the ability to allow customers/clients to action payments over the telephone. To do so, merchants and service providers often involve a third party payment service to enable payments to be made in relation to transactions between them and their customers/clients, as these third party payment services provide a single point of contact for the merchant/service provider to a multitude of payment processing entities (e.g. banks, credit card companies etc.) that they may be required to interact with in order to process the payment means used by their customers/clients (e.g. credit card, debit card, direct debit etc.).

In addition, third party payment services often take on responsibility for ensuring that the payments can be actioned in a secure fashion, in compliance with the necessary security standards (e.g. Payment Card Industry Data Security Standard (PCI DSS)). To do so, third party payment services provide means for capturing the key payment details of the customer/client and providing this information to the payment processing entities without this information being made available to the merchant/service provider or their agent. By way of example, this can be achieved by capturing the customer/client key payment details that are provided over a telephone call by using automated technologies such as dual-tone multifrequency (DTMF) signalling or voice recognition (e.g. Interactive Voice Response (IVR)), wherein automation allows the information to be captured without the involvement of an person, and then supressing the associated audio transmitted to the merchant/service provider or their agent in real-time. Such approaches significantly reduces the risk of fraud associated with payments made via telephone call.

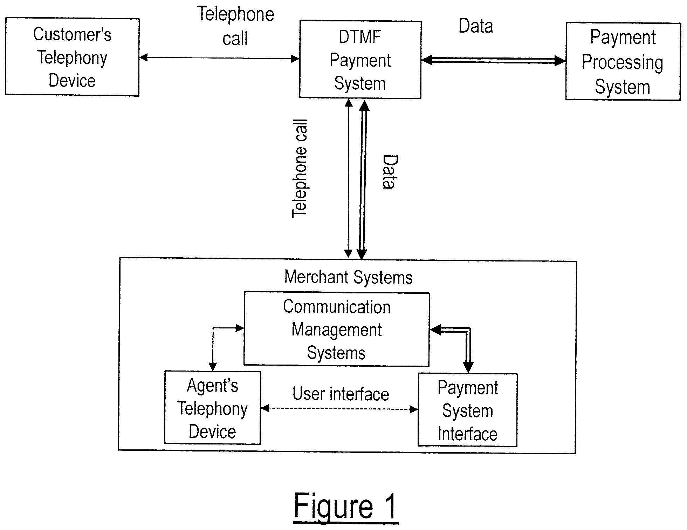

By way of example, Figure 1 illustrates schematically an example of a typical DTMF payment processing scenario in which a call between a customer and a merchant or service provider is routed to the communication management systems of the merchant or service provider via a third party DTMF payment processing system. The routing of the call via the DTMF payment processing system is necessary in order to allow the DTMF payment processing system to capture the DTMF tones corresponding to the customer's payment details that are transmitted over the call (and, if required, to supress the tones from the call audio that is transmitted to the merchant or service provider). The DTMF payment processing system can then provide the customer's payment details to an appropriate payment processing system in order to action the payment.

Before the DTMF payment processing system can implement a DTMF payment process, the DTMF payment processing system needs to be informed that a payment is required in relation to one of the telephone calls that is being routed via the DTMF payment processing system. This typically involves an agent at the merchant/service provider making use of a separate interface (e.g. a web interface) with the DTMF payment processing system provided on their computer to inform the DTMF payment processing system that a payment is required. However, the DTMF payment processing system then needs to identify the telephone call with which this particular payment instance is associated.

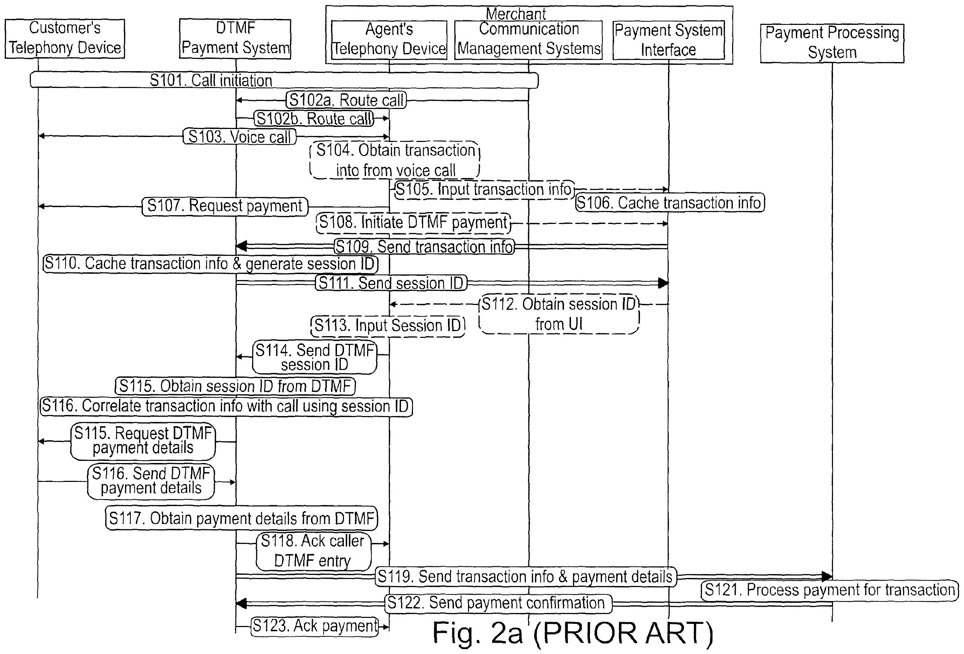

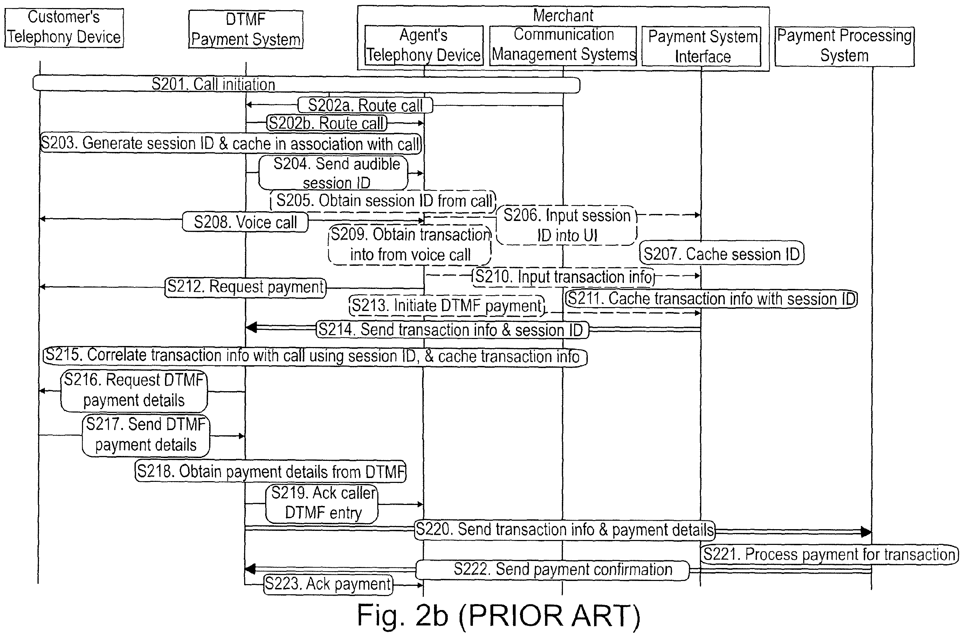

In conventional DTMF payment processing, this correlation of the payment instance requested by the merchant/service provider with the telephone call is achieved manually, as is illustrated in the exemplary call flows shown Figures 2a and 2b in which the manual steps are indicated by dashed boxes.

In Figure 2a, manual correlation of the payment instance with the associated telephone call is achieved by the DTMF payment processing system generating a session ID upon being notified that a payment is required, and sending the session ID to the merchant/service provider over the payment system interface. This session ID identifies the particular payment instance requested and is associated with transaction information provided to the DTMF payment processing system by the merchant/service provider. The merchant/service provider obtains the session ID from the payment system interface and is then required to input the session ID to the telephone call using DTMF tones. As the telephone call is routed via the DTMF payment processing system, the DTMF payment processing system can then detect the DTMF tones in the telephone call, determine the session ID, and thereby identify the telephone call associated with the payment instance. In doing so, the DTMF payment service system can correlate the telephone call with the transaction information provided by the merchant/service provider. The DTMF payment service system can then also correlate the customer's payment details obtained from DTMF tones communicated over the telephone call with the transaction information, so that both the payment details and transaction information can be provided to the appropriate payment processing system to action

In Figure 2b, rather than the session ID being communicated by the DTMF payment service system to the merchant/service provider over the payment system interface, the session ID is communicated to the merchant/service provider in an audible format over the telephone call. Then, when the merchant/service provider over wants to request that a payment is implemented in relation to this call, the merchant/service provider inputs the session ID into the payment system interface so that this is communicated to the DTMF payment service system in association with the transaction information. The DTMF payment service system can then correlate the telephone call with the transaction information provided by the merchant/service provider using the session ID. The DTMF payment service system can then also correlate the customer's payment details obtained from DTMF tones communicated over the telephone call with the transaction information, so that both the payment details and transaction information can be provided to the appropriate payment processing system to action

This manual call correlation process is that this takes some time to be completed by the merchant/service provider or their agent, and therefore extends the overall length of the call for which there is an associated cost to the merchant/service provider. In addition, as this is a manual process there is a significant risk of errors occurring that could lead to failures in the process. For example, the merchant/service provider or their agent can incorrectly input the session ID into the telephone call/payment system interface.

Prior art bill payment systems are disclosed for example in US2006/0034436 and US2013/0304650,

It is therefore desirable to provide means for correlating a telephone call with information that is to be used in a third party service implemented in relation to the telephone call without the intervention of an individual that is involved in the call.

Therefore, according to a first aspect there is provided a method of correlating a telephone call between a first party and a second party with information that is to be used in a third party service implemented in relation to the telephone call. The method comprises routing telephone calls involving the first party via a third party service system that implements the third party service. The method further comprises, at a communication management system of the first party, determining call identification data for the telephone call and session data associated with a session of the third party service to be implemented in relation to the telephone call, and sending the call identification data and the session data to the third party service system; and, at the third party service system, receiving the call identification data and the session data from the communication management system, using the received call identification data to identify the telephone call, using the received session data to determine the information that is be used in the third party service, and correlating the information with the identified telephone call.

The third party service system may be a payment service system configured to enable a payment to be made in relation to a transaction between the first party and the second party, and the information that is be used in the third party service may comprise payment details provided by the second party. The payment details provided by the second party may then comprises one or more of a primary account number, credit card number, or debit card number, a card verification code, an card issue number, a card date of validity and/or date of expiry, a password or pin code.

The session data associated with a session of the payment service to be implemented in relation to the telephone call may comprise transaction identification data for identifying the transaction to which the payment relates. The transaction identification data for identifying the transaction to which the payment relates may comprise one or more of a unique agent identifier for an agent of the first party that has provided the transaction information to the payment service, a unique computer identifier for a computer of the first party that has provided the transaction information to the payment service, and a unique transaction identifier for assigned to the transaction.

The payment details provided by the second party may be communicated from the second party to the third party service system over the telephone call using any of DTMF audio tones and spoken word (e.g. using Interactive Voice Reconigition (IVR)).

The method may further comprise, at the payment service system, receiving transaction information relating to the transaction from the first party, using the transaction identification data to correlate the received transaction information with the telephone call, thereby associating the transaction information with the payment details communicated over the telephone call, and sending the transaction information and the associated payment details to a payment processing system to action the payment.

Alternatively, third party service system may be a call recording service system configured to record audio of the telephone call between the first party and the second party, and the information that is be used in the third party service may comprise metadata associated with the telephone call.

The session data associated with a session of the call recording service to be implemented in relation to the telephone call may comprise the metadata associated with the telephone call. The metadata may comprise one or more of an identifier indicating a type for the telephone call, a unique agent identifier for an agent of the first party that has provided the transaction information to the payment service, a unique computer identifier for a computer of the first party that has provided the transaction information to the payment service, and a unique identifier assigned to the second party.

The method may further comprise, at the call recording service system, after receiving the call identification data and the metadata associated with the telephone call from the communication management system, using the received call identification data to identify the telephone call, correlating the metadata with the identified telephone call, and storing the metadata in association with the audio recording of the identified telephone call.

The call identification data may comprise one or more of a timestamp for the start of the telephone call, a telephone number of the second party, a telephone number of the first party to which the telephone call has been routed, a telephone number of an agent of the first party that is handling the telephone call, header information extracted from data packets that comprise the telephone call, and a unique call identifier assigned to the telephone call.

According to a second aspect of the present invention there is provided a communication management system of a first party configured to enable correlation of a telephone call between the first party and a second party with information that is to be used in a third party service implemented in relation to the telephone call. The communication management system comprises a receiver configured to receive telephone calls involving the first party that have been routed to the communication management system by a third party service system that implements the third party service, a processor configured to determine call identification data for the telephone call and session data associated with a session of the third party service to be implemented in relation to the telephone call, and a transmitter configured to send the call identification data and the session data to the third party service system.

According to a third aspect of the present invention there is provided a method of operating a communication management system of a first party in order to enable correlation of a telephone call between the first party and a second party with information that is to be used in a third party service implemented in relation to the telephone call. The method comprises receiving a telephone call involving the first party that has been routed to the communication management system by a third party service system that implements the third party service, determining call identification data for the telephone call and session data associated with a session of the third party service to be implemented in relation to the telephone call, and sending the call identification data and the session data to the third party service system.

According to a fourth aspect of the present invention there is provided a computer readable medium storing computer implementable instructions which when implemented by a programmable computer cause the computer to perform the method according to the third aspect.

According to a fifth aspect of the present invention there is provided a third party service system configured to implement a third party service in relation to a telephone call between a first party and a second party. The third party service system comprises a transceiver configured to receive telephone calls involving the first party that have been routed via the third party service system and to implement onward routing of the received telephone calls, a receiver configured to receive call identification data for a telephone call and session data associated with a session of the third party service to be implemented in relation to the telephone call from a communication management system of the first party, and a processor configured to use the received call identification data to identify the telephone call, to use the received session data to determine the information that is be used in the third party service, to correlate the information with the identified telephone call, and to utilise the information when implementing the third party service in relation to the telephone call.

According to a sixth aspect of the present invention there is provided a method of operating a third party service system in order to implement a third party service in relation to a telephone call between a first party and a second party. The method comprises receiving telephone calls involving the first party that have been routed via the third party service system and implementing onward routing of the received telephone calls, receiving call identification data for a telephone call and session data associated with a session of the third party service to be implemented in relation to the telephone call from a communication management system of the first party, using the received call identification data to identify the telephone call, using the received session data to determine the information that is be used in the third party service, correlating the information with the identified telephone call, and utilising the information when implementing the third party service in relation to the telephone call.

According to a seventh aspect of the present invention there is provided a computer readable medium storing computer implementable instructions which when implemented by a programmable computer cause the computer to perform the method according to the sixth aspect.

The present invention will now be more particularly described by way of example only with reference to the accompanying drawings, in which:
Figure 1 illustrates schematically an example of a typical DTMF payment processing scenario;
Figure 2a is a call flow diagram illustrating a first example of a conventional DTMF payment process;
Figure 2b is a call flow diagram illustrating a second example of a conventional DTMF payment process;
Figure 3 is a call flow diagram illustrating an embodiment of a DTMF payment process implemented in accordance with the methods described herein;
Figure 4 illustrates schematically an example of a third party call recording scenario;
Figure 5 is a call flow diagram illustrating an embodiment of a third party call recording process implemented in accordance with the methods described herein;
Figure 6 illustrates schematically an embodiment of a communication management system of a merchant/service provider as described herein; and
Figure 7 illustrates schematically an embodiment of a third party service system as described herein.

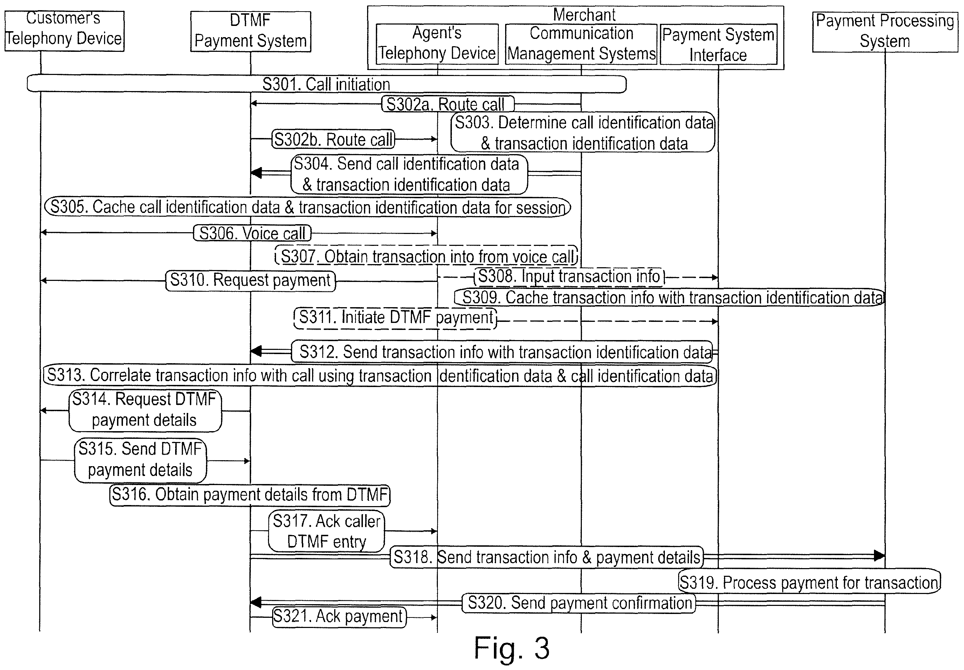

Figure 3 is a call flow diagram illustrating an embodiment of a DTMF payment process implemented in which the correlation of a telephone call with information that is to be used in a third party DTMF payment service implemented in relation to the telephone call is achieved without the intervention of an individual that is involved in the call.

In this embodiment, upon becoming involved in a call with a customer, the communication management system of a merchant/service provider determines some call identification data from the call and also determines some data that will allow any subsequent transaction in relation to this call to be identified.

For example, the call identification data that can determined by the communication management system can include, but is not limited to, one or more of a timestamp for the start of the telephone call, a telephone number of the customer, a telephone number of the merchant/service provider to which the telephone call has been routed, a telephone number of the agent of the merchant/service provider that is handling the telephone call, some header information that can be extracted from data packets that comprise the telephone call, and a unique call identifier assigned to the telephone call.

Also by way of example, the transaction identification data that can determined by the communication management system can include, but is not limited to, one or more of a unique agent identifier for an agent of the merchant/service provider that is to handle the call, a unique computer identifier for a computer of the merchant/service provider that is to involved in handling a transaction in relation to the call, and a unique transaction identifier that is assigned to any transactions required in relation to the call.

The communication management system then sends the call identification data and the transaction identification data to the DTMF payment service system. The DTMF payment service system can then cache/store the received call identification data and the transaction identification data. When a DTMF payment process is subsequently initiated in relation to the telephone call, the DTMF payment service system can then use transaction identification data included in the transaction information received from the merchant/service provider and the received call identification data to correlate the requested payment/transaction with the associated telephone call.

Consequently, when the customer's payment details are communicated to the DTMF payment service system using DMTF tones over the telephone call, the DTMF payment service system can correlate the received payment details with the transaction information, and send both the payment details and the transaction information to an appropriate payment processing system to action the payment.

This process achieves call correlation without the intervention of an individual that is involved in the call, eliminating a number of manual steps from the process (as illustrated by reduced number of dashed boxes in Figure 3), thereby improving both the speed with which payments are processed and reducing the risk of errors occurring in the call correlation process that would otherwise lead too failures.

Whilst the embodiment described above relates to a DTMF payment process it is equally applicable to other payment processes that are implemented over telephone calls. For example, this automatic call correlation process is equally applicable to a third party payment service in which the customer's payment details are communicated vocally/using speech wherein the payment details would be captured using voice recognition technology.

In addition, the present inventors have also recognised that such an automatic call correlation process could also be applied to a scenario in which a third party service is used to implement call recording.

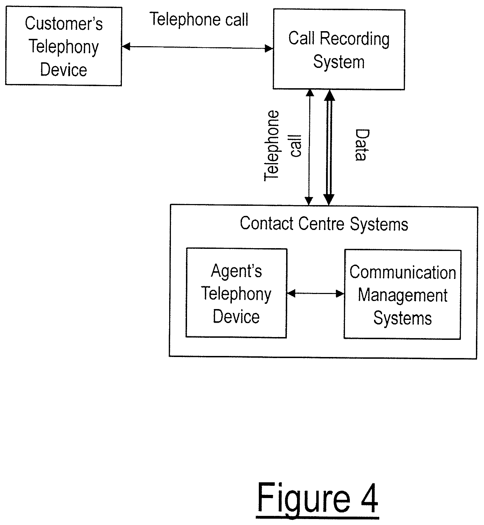

Figure 4 illustrates schematically an example of a call recording scenario in which a call between a customer and a call/contact centre is routed to the communication management systems of the call/contact centre via a third party call recording system. The routing of the call via the call recording system is necessary in order to allow the call recording system to capture and record the telephone call audio.

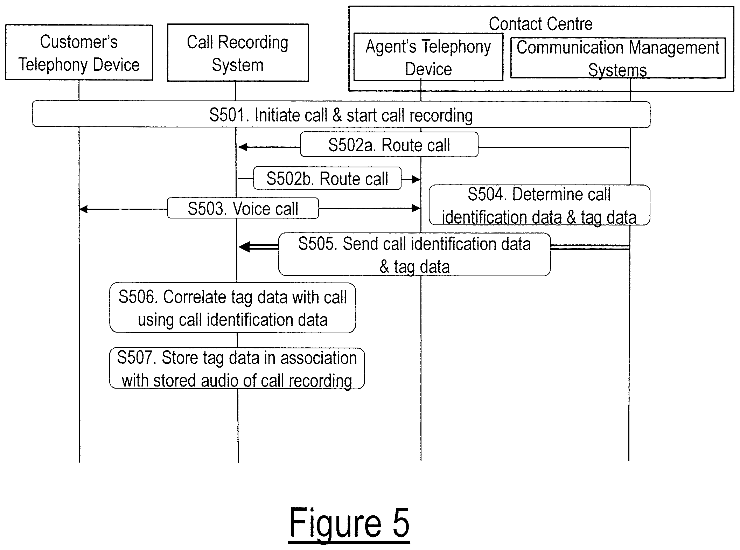

Figure 5 then illustrates a call flow diagram illustrating an embodiment of a call recording process in which the correlation of a telephone call with metadata that is be tagged/stored in association with the recorded audio.

In this embodiment, upon becoming involved in a call with a customer, the communication management system of a call/contact centre determines some call identification data from the call and also determines some metadata that is to be associated with the recorded audio.

For example, the call identification data that can determined by the communication management system can include, but is not limited to, one or more of a timestamp for the start of the telephone call, a telephone number of the customer, a telephone number of the merchant/service provider to which the telephone call has been routed, a telephone number of the agent of the merchant/service provider that is handling the telephone call, some header information that can be extracted from data packets that comprise the telephone call, and a unique call identifier assigned to the telephone call.

Also by way of example, the metadata that is to be associated with the recorded audio can include, but is not limited to, one or more of an identifier indicating a type for the telephone call (e.g. sale, enquiry, complaint, marketing etc), a unique agent identifier for an agent of the call/contact centre that is involved in/is handling the telephone call, a unique computer identifier for a computer of the call/contact centre that has provided the call identification information to the call recording system, and a unique identifier assigned to the customer.

The communication management system then sends the call identification data and the metadata to the call recording system. The call recording system can then cache/store the received call identification data and the metadata and can then use the call identification data to identify the telephone call, and thereby correlate the received metadata with the identified telephone call.

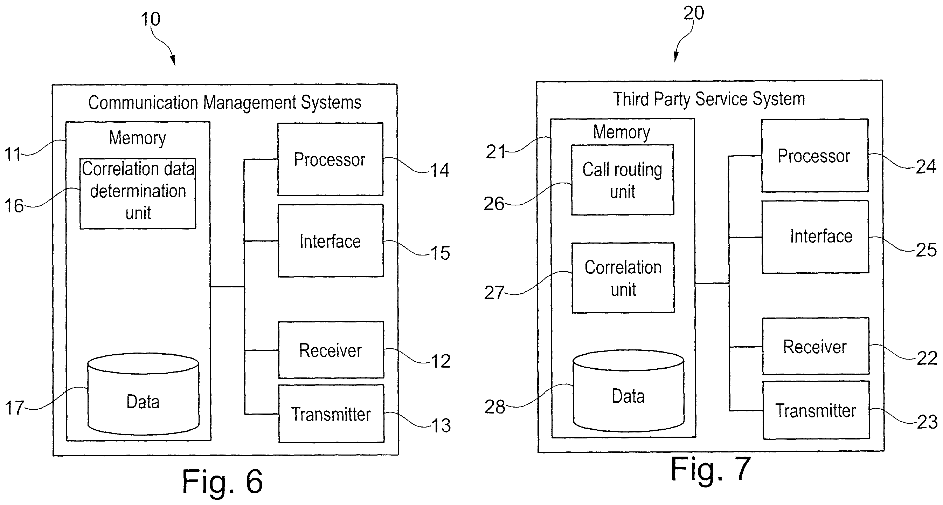

Figure 6 illustrates schematically an embodiment of a communication management system 10 of a merchant/service provider suitable for implementing the methods described herein. The system 10 can be implemented as a combination of computer hardware and software, and comprises a memory 11, a receiver 12, a transmitter 13, a processor 14 and an interface 15. Whilst the system 10 has been illustrated schematically as single device (e.g. server or computer) comprising a single occurrence of each of the functional elements listed above, the system could equally comprise multiple occurrences of each functional element and could equally be provided by a plurality of separate devices that cooperate to provide the required functionality. By way of example, separate aspects of the functionality of the system could be distributed between a number of separate servers or computer devices, such that a first group of one or more servers/computer devices implements all of the necessary processing and interface functions whilst a second group of one or more servers/computer devices provides database functionality (e.g. including storage, security, data integrity, data redundancy etc). The memory 11 typically stores the various programs/executable files that are implemented by the processor 14, including a correlation data determination unit 16 and any data 17 that may be of use to the system 10.

Figure 7 illustrates schematically an embodiment of a third party service system 20 suitable for implementing the methods described herein. The system 20 can be implemented as a combination of computer hardware and software, and comprises a memory 21, a receiver 22, a transmitter 23, a processor 24 and an interface 25. Whilst the system 20 has been illustrated schematically as single device (e.g. server or computer) comprising a single occurrence of each of the functional elements listed above, the system could equally comprise multiple occurrences of each functional element and could equally be provided by a plurality of separate devices that cooperate to provide the required functionality. By way of example, separate aspects of the functionality of the system could be distributed between a number of separate servers or computer devices, such that a first group of one or more servers/computer devices implements all of the necessary processing and interface functions whilst a second group of one or more servers/computer devices provides database functionality (e.g. including storage, security, data integrity, data redundancy etc). The memory 21 typically stores the various programs/executable files that are implemented by the processor 24, including a call routing unit 26, a correlation unit 27, and any data 28 that may be of use to the system 20.

It will be appreciated that individual items described above may be used on their own or in combination with other items shown in the drawings or described in the description and that items mentioned in the same passage as each other or the same drawing as each other need not be used in combination with each other. In addition, any reference to "comprising" or "consisting" is not intended to be limiting in any way whatsoever and the reader should interpret the description and claims accordingly.

## Claims

1. A method of correlating a telephone call between a first party and a second party with information that is to be used in a third party service implemented in relation to the telephone call, the method comprising:
routing telephone calls involving the first party via a third party service system that implements the third party service;
at a communication management system of the first party, determining call identification data for the telephone call and session data associated with a session of the third party service to be implemented in relation to the telephone call, and sending the call identification data and the session data to the third party service system; and
at the third party service system, receiving the call identification data and the session data from the communication management system, using the received call identification data to identify the telephone call, using the received session data to determine the information that is be used in the third party service, and correlating the information with the identified telephone call.

2. The method of claim 1, wherein the third party service system is a payment service system configured to enable a payment to be made in relation to a transaction between the first party and the second party, and the information that is be used in the third party service comprises payment details provided by the second party.

3. The method of claim 2, wherein the payment details provided by the second party comprises one or more of:
a primary account number, credit card number, or debit card number;
a card verification code;
an card issue number;
a card date of validity and/or date of expiry
a password or pin code.

4. The method of any of claims 2 or 3, wherein the session data associated with a session of the payment service to be implemented in relation to the telephone call comprises transaction identification data for identifying the transaction to which the payment relates.

5. The method of claim 4, wherein the transaction identification data for identifying the transaction to which the payment relates comprises:
a unique agent identifier for an agent of the first party that has provided the transaction information to the payment service;
a unique computer identifier for a computer of the first party that has provided the transaction information to the payment service; and
a unique transaction identifier for assigned to the transaction.

6. The method of any of claims 2 to 5, wherein the payment details provided by the second party are communicated from the second party to the third party service system over the telephone call using any of DTMF audio tones and speech (e.g. using Interactive Voice Reconigition (IVR)).

7. The method of claim 6, and further comprising:
at the payment service system, receiving transaction information relating to the transaction from the first party, using the transaction identification data to correlate the received transaction information with the telephone call, thereby associating the transaction information with the payment details communicated over the telephone call, and sending the transaction information and the associated payment details to a payment processing system to action the payment.

8. The method of claim 1, wherein the third party service system is a call recording service system configured to record audio of the telephone call between the first party and the second party, and the information that is be used in the third party service comprises metadata associated with the telephone call.

9. The method of claim 8, wherein the session data associated with a session of the call recording service to be implemented in relation to the telephone call comprises the metadata associated with the telephone call.

10. The method of any of claims 8 or 9, wherein the metadata comprises one or more of:
an identifier indicating a type for the telephone call;
a unique agent identifier for an agent of the first party that is involved in the telephone call;
a unique computer identifier for a computer of the first party that has provided the call identification information to the call recording system; and
a unique identifier assigned to the second party.

11. The method of any of claims 8 to 10, and further comprising:
at the call recording service system, after receiving the call identification data and the metadata associated with the telephone call from the communication management system, using the received call identification data to identify the telephone call, correlating the metadata with the identified telephone call, and storing the metadata in association with the audio recording of the identified telephone call.

12. The method of any preceding claim, wherein the call identification data comprises one or more of:
a timestamp for the start of the telephone call;
a telephone number of the second party;
a telephone number of the first party to which the telephone call has been routed;
a telephone number of an agent of the first party that is handling the telephone call;
header information extracted from data packets that comprise the telephone call; and
a unique call identifier assigned to the telephone call.

13. A communication management system of a first party configured to enable correlation of a telephone call between the first party and a second party with information that is to be used in a third party service implemented in relation to the telephone call, the communication management system comprising:
a receiver configured to receive telephone calls involving the first party that have been routed to the communication management system by a third party service system that implements the third party service;
a processor configured to determine call identification data for the telephone call and session data associated with a session of the third party service to be implemented in relation to the telephone call; and
a transmitter configured to send the call identification data and the session data to the third party service system.

14. A method of operating a communication management system of a first party in order to enable correlation of a telephone call between the first party and a second party with information that is to be used in a third party service implemented in relation to the telephone call, the method comprising:
receiving a telephone call involving the first party that has been routed to the communication management system by a third party service system that implements the third party service;
determining call identification data for the telephone call and session data associated with a session of the third party service to be implemented in relation to the telephone call; and
sending the call identification data and the session data to the third party service system.

15. A computer readable medium storing computer implementable instructions which when implemented by a programmable computer cause the computer to perform the method as claimed in claim 14.

16. A third party service system configured to implement a third party service in relation to a telephone call between a first party and a second party, the third party service system comprising:
a transceiver configured to receive telephone calls involving the first party that have been routed via the third party service system and to implement onward routing of the received telephone calls;
a receiver configured to receive call identification data for a telephone call and session data associated with a session of the third party service to be implemented in relation to the telephone call from a communication management system of the first party; and
a processor configured to use the received call identification data to identify the telephone call, to use the received session data to determine the information that is be used in the third party service, to correlate the information with the identified telephone call, and to utilise the information when implementing the third party service in relation to the telephone call.

17. A method of operating a third party service system in order to implement a third party service in relation to a telephone call between a first party and a second party, the method comprising:
receiving telephone calls involving the first party that have been routed via the third party service system and implementing onward routing of the received telephone calls;
receiving call identification data for a telephone call and session data associated with a session of the third party service to be implemented in relation to the telephone call from a communication management system of the first party;
using the received call identification data to identify the telephone call;
using the received session data to determine the information that is be used in the third party service;
correlating the information with the identified telephone call; and
utilising the information when implementing the third party service in relation to the telephone call.

18. A computer readable medium storing computer implementable instructions which when implemented by a programmable computer cause the computer to perform the method as claimed in claim 17.

## Patentansprüche

1. Verfahren zum Korrelieren eines Telefonanrufs zwischen einer ersten Partei und einer zweiten Partei mit Informationen, die von einem Dienst einer dritten Partei genutzt werden sollen, der in Verbindung mit dem Telefonanruf umgesetzt wird, wobei das Verfahren umfasst:
Leiten von die erste Partei involvierenden Telefonanrufen über ein Dienstesystem einer dritten Partei, das den Dienst der dritten Partei umsetzt;
Bestimmen von Anrufidentifizierungsdaten des Telefonanrufs und von Sitzungsdaten, die mit einer Sitzung des Dienstes der dritten Partei verknüpft sind, der in Verbindung mit dem Telefonanruf umgesetzt werden soll, und Senden der Anrufidentifizierungsdaten und der Sitzungsdaten an das Dienstesystem der dritten Partei an einem Kommunikationsverwaltungssystem der ersten Partei; und
Empfangen der Anrufidentifizierungsdaten und der Sitzungsdaten vom Kommunikationsverwaltungssystem, Verwenden der empfangenen Anrufidentifizierungsdaten zum Identifizieren des Telefonanrufs, Verwenden der empfangenen Sitzungsdaten zum Bestimmen der Informationen, die von dem Dienst der dritten Partei verwendet werden sollen, und Korrelieren der Informationen mit dem identifizierten Telefonanruf am Dienstesystem der dritten Partei.

2. Verfahren nach Anspruch 1, wobei das Dienstesystem der dritten Partei ein Zahlungsdienstsystem ist, das zum Ermöglichen einer zu tätigenden Zahlung in Verbindung mit einer Transaktion zwischen der ersten Partei und der zweiten Partei ausgelegt ist, und wobei die von dem Dienst der dritten Partei zu verwendenden Informationen von der zweiten Partei bereitgestellte Zahlungseinzelheiten umfassen.

3. Verfahren nach Anspruch 2, wobei die von der zweiten Partei bereitgestellten Zahlungseinzelheiten eine oder mehrere der Folgenden umfassen:
eine Hauptkontonummer, Kreditkartennummer oder Debitkartennummer;
einen Kartenverifizierungscode;
eine Kartenausgabenummer;
ein Gültigkeitsdatum und/oder ein Ablaufdatum der Karte
ein Passwort oder ein Pincode.

4. Verfahren nach einem der Ansprüche 2 oder 3, wobei die Sitzungsdaten, die mit einer Sitzung des Zahlungsdienstes verknüpft sind, der in Verbindung mit dem Telefonanruf umgesetzt werden soll, Transaktionsidentifizierungsdaten zum Identifizieren der Transaktion umfassen, die die Zahlung betrifft.

5. Verfahren nach Anspruch 4, wobei die Transaktionsidentifizierungsdaten zum Identifizieren der Transaktion, die die Zahlung betrifft, umfassen:
eine einmalige Agentenkennung eines Agenten der ersten Partei, die dem Zahlungsdienst die Transaktionsinformationen bereitgestellt hat;
eine einmalige Computerkennung eines Computers der ersten Partei, der dem Zahlungsdienst die Transaktionsinformationen bereitgestellt hat; und
eine einmalige Transaktionskennung zum Zuweisen der Transaktion.

6. Verfahrens nach einem der Ansprüche 2 bis 5, wobei die von der zweiten Partei bereitgestellten Zahlungseinzelheiten dem Dienstesystem der dritten Partei von der zweiten Partei über den Telefonanruf unter Verwendung von DTMF-Audiotönen und Sprache (z. B. unter Verwendung von interaktiver Spracherkennung (Interactive Voice Recognition, IVR)) kommuniziert werden.

7. Verfahren nach Anspruch 6, und weiterhin umfassend:
Empfangen von die Transaktion betreffenden Transaktionsinformationen von der ersten Partei, Verwenden der Transaktionsidentifizierungsdaten zum Korrelieren der empfangenen Transaktionsinformationen mit dem Telefonanruf, wodurch die Transaktionsinformationen mit den über den Telefonanruf kommunizierten Zahlungseinzelheiten verknüpft werden, und Senden der Transaktionsinformationen und der verknüpften Zahlungseinzelheiten an ein Zahlungsverarbeitungssystem, um die Zahlung durchzuführen, am Zahlungsdienstsystem.

8. Verfahren nach Anspruch 1, wobei das Dienstesystem der dritten Partei ein Anrufaufzeichnungsdienstsystem ist, das zum Aufzeichnen der Audiosignale des Telefonanrufs zwischen der ersten Partei und der zweiten Partei ausgelegt ist, und wobei die von dem Dienst der dritten Partei zu verwendenden Informationen mit dem Telefonanruf verknüpfte Metadaten umfassen.

9. Verfahren nach Anspruch 8, wobei die Sitzungsdaten, die mit einer Sitzung des Anrufaufzeichnungsdienstes verknüpft sind, der in Verbindung mit dem Telefonanruf umgesetzt werden soll, die mit dem Telefonanruf verknüpften Metadaten umfassen.

10. Verfahren nach einem der Ansprüche 8 oder 9, wobei die Metadaten eines oder mehrere der Folgenden umfassen:
eine Kennung, die eine Art des Telefonanrufs angibt;
eine einmalige Agentenkennung eines Agenten der ersten Partei, die am Telefonanruf involviert ist;
eine einmalige Computerkennung eines Computers der ersten Partei, der dem Anrufaufzeichnungsdienst die Anrufidentifizierungsinformationen bereitgestellt hat; und
eine einmalige Kennung, die der zweiten Partei zugewiesen ist.

11. Verfahren nach einem der Ansprüche 8 bis 10, und weiterhin umfassend:
Verwenden der empfangenen Anrufidentifizierungsdaten zum Identifizieren des Telefonanrufs, Korrelieren der Metadaten mit dem identifizierten Telefonanruf und Speichern der mit der Audioaufzeichnung des identifizierten Telefonanrufs verknüpften Metadaten am Anrufaufzeichnungsdienstsystem nach Empfangen der Anrufidentifizierungsdaten und der mit dem Telefonanruf assoziierten Metadaten von dem Kommunikationsverwaltungssystem.

12. Verfahren nach einem der vorhergehenden Ansprüche, wobei die Anrufidentifizierungsdaten eines oder mehrere der Folgenden umfassen:
einen Zeitstempel über den Beginn des Telefonanrufs;
eine Telefonnummer der zweiten Partei;
eine Telefonnummer der ersten Partei, zu der der Telefonanruf geleitet wurde;
eine Telefonnummer eines Agenten der ersten Partei, der den Telefonanruf abwickelt;
aus Datenpaketen extrahierte Kopfzeileninformationen, die die Telefonnummer umfassen; und
eine einmalige Anrufkennung, die dem Telefonanruf zugewiesen ist.

13. Kommunikationsverwaltungssystem einer ersten Partei, die zum Ermöglichen einer Korrelation eines Telefonanrufs zwischen der ersten Partei und einer zweiten Partei mit Informationen ausgelegt ist, die von einem Dienst einer dritten Partei genutzt werden sollen, der in Verbindung mit dem Telefonanruf umgesetzt wird, wobei das Kommunikationsverwaltungssystem umfasst:
einen Empfänger, der zum Empfangen von die erste Partei involvierenden Telefonanrufen ausgelegt ist, die von einem Dienstesystem einer dritten Partei, das den Dienst der dritten Partei umsetzt, zum Kommunikationsverwaltungssystem geleitet wurden;
einen Prozessor, der zum Bestimmen von Anrufidentifizierungsdaten des Telefonanrufs und von Sitzungsdaten, die mit einer Sitzung des Dienstes der dritten Partei verknüpft sind, der in Verbindung mit dem Telefonanruf umgesetzt werden soll, ausgelegt ist; und
einen Sender, der zum Senden der Anrufidentifizierungsdaten und der Sitzungsdaten an das Dienstesystem der dritten Partei ausgelegt ist.

14. Verfahren zum Betreiben eines Kommunikationsverwaltungssystems einer ersten Partei zum Ermöglichen einer Korrelation eines Telefonanrufs zwischen der ersten Partei und einer zweiten Partei mit Informationen, die von einem Dienst einer dritten Partei genutzt werden sollen, der in Verbindung mit dem Telefonanruf umgesetzt wird, wobei das Verfahren umfasst:
Empfangen eines die erste Partei involvierenden Telefonanrufs, der von einem Dienstesystem einer dritten Partei, das den Dienst der dritten Partei umsetzt, zum Kommunikationsverwaltungssystem geleitet wurde;
Bestimmen von Anrufidentifizierungsdaten des Telefonanrufs und von Sitzungsdaten, die mit einer Sitzung des Dienstes der dritten Partei verknüpft sind, der in Verbindung mit dem Telefonanruf umgesetzt werden soll; und
Senden der Anrufidentifizierungsdaten und der Sitzungsdaten an das Dienstesystem der dritten Partei.

15. Computerlesbares Medium, das computerumsetzbare Anweisungen speichert, die beim Umsetzen durch einen programmierbaren Computer bewirken, dass der Computer das in Anspruch 14 beanspruchte Verfahren durchführt.

16. Dienstesystem einer dritten Partei, das zum Umsetzen eines Dienstes einer dritten Partei in Verbindung mit einem Telefonanruf zwischen einer ersten Partei und einer zweiten Partei ausgelegt ist, wobei das Dienstesystem der dritten Partei umfasst:
einen Transceiver, der zum Empfangen von die erste Partei involvierenden Telefonanrufen, die über das Dienstesystem der dritten Partei geleitet wurden, und zum Umsetzen eines Weiterleitens der empfangenen Telefonanrufe ausgelegt ist;
einen Empfänger, der zum Empfangen von Anrufidentifizierungsdaten eines Telefonanrufs und von Sitzungsdaten, die mit einer Sitzung des Dienstes der dritten Partei verknüpft sind, der in Verbindung mit dem Telefonanruf umgesetzt werden soll, von einem Kommunikationsverwaltungssystem der ersten Partei ausgelegt ist; und
einen Prozessor, der zum Verwenden der empfangenen Anrufidentifizierungsdaten zum Identifizieren des Telefonanrufs, zum Verwenden der empfangenen Sitzungsdaten zum Bestimmen der für den Dienst der dritten Partei zu verwendenden Informationen, zum Korrelieren der Informationen mit dem identifizierten Telefonanruf und zum Nutzen der Informationen beim Umsetzen des Dienstes der dritten Partei in Verbindung mit dem Telefonanruf ausgelegt ist.

17. Verfahren zum Betreiben eines Dienstesystems einer dritten Partei zum Umsetzen eines Dienstes einer dritten Partei in Verbindung mit einem Telefonanruf zwischen einer ersten Partei und einer zweiten Partei, wobei das Verfahren umfasst:
Empfangen von die erste Partei involvierenden Telefonanrufen, die über das Dienstesystem der dritten Partei geleitet wurden, und Umsetzen eines Weiterleitens der empfangenen Telefonanrufe;
Empfangen von Anrufidentifizierungsdaten eines Telefonanrufs und von Sitzungsdaten, die mit einer Sitzung des Dienstes der dritten Partei verknüpft sind, der in Verbindung mit dem Telefonanruf umgesetzt werden soll, von einem Kommunikationsverwaltungssystem der ersten Partei;
Verwenden der empfangenen Anrufidentifizierungsdaten zum Identifizieren des Telefonanrufs;
Verwenden der empfangenen Sitzungsdaten zum Bestimmen der für den Dienst der dritten Partei zu verwendenden Informationen;
Korrelieren der Informationen mit dem identifizierten Telefonanruf; und
Nutzen der Informationen beim Umsetzen des Dienstes der dritten Partei in Verbindung mit dem Telefonanruf

18. Computerlesbares Medium, das computerumsetzbare Anweisungen speichert, die beim Umsetzen durch einen programmierbaren Computer bewirken, dass der Computer das in Anspruch 17 beanspruchte Verfahren durchführt.

## Revendications

1. Procédé de corrélation d'un appel téléphonique entre un premier correspondant et un second correspondant avec des informations qui doivent être utilisées dans un service grand public implémenté en lien avec l'appel téléphonique, le procédé comprenant :
l'acheminement d'appels téléphoniques impliquant le premier correspondant via un système de service grand public qui implémente le service grand public ;
au niveau d'un système de gestion de communication du premier correspondant, la détermination de données d'identification d'appel pour l'appel téléphonique et de données de session associées à une session du service grand public à implémenter en lien avec l'appel téléphonique, et l'envoi des données d'identification d'appel et des données de session au système de service grand public ; et
au niveau du système de service grand public, la réception des données d'identification d'appel et des données de session en provenance du système de gestion de communication, l'utilisation des données d'identification d'appel reçues pour identifier l'appel téléphonique, l'utilisation des données de session reçues pour déterminer les informations qui doivent être utilisées dans le service grand public, et la corrélation des informations avec l'appel téléphonique identifié.

2. Procédé selon la revendication 1, dans lequel le système de service grand public est un système de service de paiement configuré pour permettre de réaliser un paiement en lien avec une transaction entre le premier correspondant et le second correspondant, et les informations qui doivent être utilisées dans le service grand public comprennent des détails de paiement fournis par le second correspondant.

3. Procédé selon la revendication 2, dans lequel les détails de paiement fournis par le second correspondant comprennent un ou plusieurs parmi :
un numéro de compte principal, un numéro de carte de crédit, ou un numéro de carte de débit ;
un code de vérification de carte ;
un numéro d'émission de carte ;
une date de validité et/ou une date d'expiration de carte
un mot de passe ou code pin.

4. Procédé selon l'une quelconque des revendications 2 ou 3, dans lequel les données de session associées à une session du service de paiement à implémenter en lien avec l'appel téléphonique comprennent des données d'identification de transaction pour identifier la transaction à laquelle le paiement est lié.

5. Procédé selon la revendication 4, dans lequel les données d'identification de transaction pour identifier la transaction à laquelle le paiement est lié comprennent :
un identifiant d'agent unique pour un agent du premier correspondant qui a fourni les informations de transaction au service de paiement ;
un identifiant d'ordinateur unique pour un ordinateur du premier correspondant qui a fourni les informations de transaction au service de paiement ; et
un identifiant de transaction unique à attribuer à la transaction.

6. Procédé selon l'une quelconque des revendications 2 à 5, dans lequel les détails de paiement fournis par le second correspondant sont communiqués du second correspondant au système de service grand public par l'appel téléphonique à l'aide de l'une quelconque de tonalités audio DTMF et de la parole (par exemple à l'aide d'une reconnaissance vocale interactive (IVR)).

7. Procédé selon la revendication 6, et comprenant en outre :
au niveau du système de service de paiement, la réception d'informations de transaction concernant la transaction en provenance du premier correspondant, l'utilisation des données d'identification de transaction pour corréler les informations de transaction reçues avec l'appel téléphonique, associant ainsi les informations de transaction aux détails de paiement communiqués par l'appel téléphonique, et l'envoi des informations de transaction et des détails de paiement associés à un système de traitement de paiement pour actionner le paiement.

8. Procédé selon la revendication 1, dans lequel le système de service grand public est un système de service d'enregistrement d'appel configuré pour enregistrer un audio de l'appel téléphonique entre le premier correspondant et le second correspondant, et les informations qui doivent être utilisées dans le service grand public comprennent des métadonnées associées à l'appel téléphonique.

9. Procédé selon la revendication 8, dans lequel les données de session associées à une session du service d'enregistrement d'appel à implémenter en lien avec l'appel téléphonique comprennent les métadonnées associées à l'appel téléphonique.

10. Procédé selon l'une quelconque des revendications 8 ou 9, dans lequel les métadonnées comprennent un ou plusieurs parmi :
un identifiant indiquant un type pour l'appel téléphonique ;
un identifiant d'agent unique pour un agent du premier correspondant qui est impliqué dans l'appel téléphonique ;
un identifiant d'ordinateur unique pour un ordinateur du premier correspondant qui a fourni les informations d'identification d'appel au système d'enregistrement d'appel ; et
un identifiant unique attribué au second correspondant.

11. Procédé selon l'une quelconque des revendications 8 à 10, et comprenant en outre :
au niveau du système de service d'enregistrement d'appel, après réception des données d'identification d'appel et des métadonnées associées à l'appel téléphonique en provenance du système de gestion de communication, l'utilisation des données d'identification d'appel reçues pour identifier l'appel téléphonique, la corrélation des métadonnées avec l'appel téléphonique identifié et le stockage des métadonnées en association avec l'enregistrement audio de l'appel téléphonique identifié.

12. Procédé selon une quelconque revendication précédente, dans lequel les données d'identification d'appel comprennent un ou plusieurs parmi :
une estampille temporelle pour le début de l'appel téléphonique ;
un numéro de téléphone du second correspondant ;
un numéro de téléphone du premier correspondant vers lequel l'appel téléphonique a été acheminé ;
un numéro de téléphone d'un agent du premier correspondant qui se charge de l'appel téléphonique ;
des informations d'en-tête extraites de paquets de données qui comprennent l'appel téléphonique ; et
un identifiant d'appel unique attribué à l'appel téléphonique.

13. Système de gestion de communication d'un premier correspondant configuré pour permettre une corrélation d'un appel téléphonique entre le premier correspondant et un second correspondant avec des informations qui doivent être utilisées dans un service grand public implémenté en lien avec l'appel téléphonique, le système de gestion de communication comprenant :
un récepteur configuré pour recevoir des appels téléphoniques impliquant le premier correspondant qui ont été acheminés vers le système de gestion de communication par un système de service grand public qui implémente le service grand public ;
un processeur configuré pour déterminer des données d'identification d'appel pour l'appel téléphonique et des données de session associées à une session du service grand public à implémenter en lien avec l'appel téléphonique ; et
un émetteur configuré pour envoyer les données d'identification d'appel et les données de session au système de service grand public.

14. Procédé de fonctionnement d'un système de gestion de communication d'un premier correspondant afin de permettre une corrélation d'un appel téléphonique entre le premier correspondant et un second correspondant avec des informations qui doivent être utilisées dans un service grand public implémenté en lien avec l'appel téléphonique, le procédé comprenant :
la réception d'un appel téléphonique impliquant le premier correspondant qui a été acheminé vers le système de gestion de communication par un système de service grand public qui implémente le service grand public ;
la détermination de données d'identification d'appel pour l'appel téléphonique et de données de session associées à une session du service grand public à implémenter en lien avec l'appel téléphonique ; et
l'envoi des données d'identification d'appel et des données de session au système de service grand public.

15. Support lisible par ordinateur stockant des instructions implémentables par ordinateur qui lorsqu'elles sont implémentées par un ordinateur programmable amènent l'ordinateur à réaliser le procédé tel que revendiqué à la revendication 14.

16. Système de service grand public configuré pour implémenter un service grand public en lien avec un appel téléphonique entre un premier correspondant et un second correspondant, le système de service grand public comprenant :
un émetteur-récepteur configuré pour recevoir des appels téléphoniques impliquant le premier correspondant qui ont été acheminés via le système de service grand public et pour implémenter un réacheminement des appels téléphoniques reçus ;
un récepteur configuré pour recevoir des données d'identification d'appel pour un appel téléphonique et des données de session associées à une session du service grand public à implémenter en lien avec l'appel téléphonique en provenance d'un système de gestion de communication du premier correspondant ; et
un processeur configuré pour utiliser les données d'identification d'appel reçues pour identifier l'appel téléphonique, pour utiliser les données de session reçues pour déterminer les informations qui doivent être utilisées dans le service grand public, pour corréler les informations avec l'appel téléphonique identifié, et pour employer les informations lors de l'implémentation du service grand public en lien avec l'appel téléphonique.

17. Procédé de fonctionnement d'un système de service grand public afin d'implémenter un service grand public en lien avec un appel téléphonique entre un premier correspondant et un second correspondant, le procédé comprenant :
la réception d'appels téléphoniques impliquant le premier correspondant qui ont été acheminés via le système de service grand public et l'implémentation d'un réacheminement des appels téléphoniques reçus ;
la réception de données d'identification d'appel pour un appel téléphonique et de données de session associées à une session du service grand public à implémenter en lien avec l'appel téléphonique en provenance d'un système de gestion de communication du premier correspondant ;
l'utilisation des données d'identification d'appel reçues pour identifier l'appel téléphonique ;
l'utilisation des données de session reçues pour déterminer les informations qui doivent être utilisées dans le service grand public ;
la corrélation des informations avec l'appel téléphonique identifié ; et
l'emploi des informations lors de l'implémentation du service grand public en lien avec l'appel téléphonique.

18. Support lisible par ordinateur stockant des instructions implémentables par ordinateur qui lorsqu'elles sont implémentées par un ordinateur programmable amènent l'ordinateur à réaliser le procédé tel que revendiqué à la revendication 17.
